# EUROPEAN PATENT APPLICATION

(11) **EP 3 582 116 A1**
(43) Date of publication of application: **18.12.2019**
(21) Application number: 18821979.4
(22) Date of filing: 09.05.2018
(51) Int. Cl.: G06F 16/51, G06F 16/957

(54) **WEBPAGE LOADING METHOD, WEBPAGE LOADING SYSTEM, AND SERVER**

(30) Priority: 25.04.2018 CN 201810380712
(71) Applicant: Wangsu Science & Technology Co., Ltd., Shanghai 200030 (CN)
(72) Inventor:
(74) Representative: Hanna Moore + Curley
(86) International application number: PCT/CN2018/086185
(87) International publication number: WO 2019/205191

(57) **Abstract**

The embodiments of the present disclosure relate to the field of the Internet technology, and disclose a webpage loading method, a webpage loading system, and a server thereof. In the present disclosure, a webpage loading method, for application on an edge server in a content delivery network, includes: when receiving a page loading request from a user terminal, obtaining, based on the page loading request, a loading list of a corresponding page, where the loading list includes a plurality of to-be-loaded items; identifying a loading image item from the to-be-loaded items, and configuring a corresponding loading quality for the loading image item, where the configured loading quality is lower than a loading quality of an original image; rewriting the loading list based on the configured loading quality; and feeding back the rewritten loading list to the user terminal, to allow the user terminal to request each loading item for loading the page. The embodiments of the present disclosure, through adaptively adjusting the qualities of images in the load items, increase the page loading speed, optimize user experience, and facilitate promotion. At the same time, there is no need to modify the code of source stations, thereby reducing the technical development time for website owners.

## Description

### FIELD OF DISCLOSURE

The present disclosure generally relates to the field of Internet technology and, more particularly, relates to a webpage access acceleration technology.

### BACKGROUND

In the existing webpage loading process, users have a poor experience with the blank screen state before a webpage being loaded. Therefore, accelerating the webpage loading process has always been a focus of continuous improvements in the field. The applicants of the present disclosure notice that, ideally, a webpage should open within 1 second, and that images often consume the largest proportion of an overall webpage size. According to the "real-time Internet monitor" (a tool that monitors Internet conditions in real time, and displays global attack traffic, Web connection speeds, and Web traffic congestions), the image content has taken up 63% of the volume of the entire websites, which makes it one of the most bandwidth-consuming and webpage loading speed-impacting parts in the webpages.

### BRIEF SUMMARY OF THE DISCLOSURE

The objective of the embodiments of the present disclosure is to provide a webpage loading method, a webpage loading system, and a server thereof, that increase the page loading speed in webpage loading optimization, optimize user experience, and facilitate promotion. At the same time, there is no need to modify the code of source stations, thereby reducing the technical development time for website owners.

To solve the above technical problems, the embodiments of the present disclosure provide a webpage loading method, which is applied to an edge server in a content delivery network. The method includes: when receiving a page loading request from a user terminal, obtaining, based on the page loading request, a loading list of a corresponding page, where the loading list includes a plurality of to-be-loaded items; identifying a loading image item from the to-be-loaded items, and configuring a corresponding loading quality for the loading image item, where the configured loading quality is lower than a loading quality of an original image; rewriting the loading list based on the configured loading quality; and feeding back the rewritten loading list to the user terminal, to allow the user terminal to request each loading item for loading the page.

The embodiments of the present disclosure further provide a server that includes: at least one processor; and a memory communicatively coupled to the at least one processor; where the memory stores instructions executable by the at least one processor, and the instructions, when executed by the at least one processor, cause the at least one processor to implement the above-described webpage loading method.

The embodiments of the present disclosure further provide a webpage loading system that includes a user terminal and the above-described server.

The embodiments of the present disclosure further provide a computer-readable storage medium that stores computer programs. The computer programs, when executed by a processor, implement the above-described webpage loading method.

Compared with the existing technologies, the main difference and its consequential effects of the disclosed embodiments lie in that: in the webpage loading process under the existing technologies, the loading items requested by a user terminal based on the loading list are all source files provided by the source station without intermediate processing, even the processing for the loading image items. However, in the present disclosure, the qualities of the images requested by a user terminal are lower than the qualities of the original images. This makes the data volume of the loading images smaller and the loading speed higher when loading the images, thereby improving the overall loading speed of the page. In addition, as the present disclosure makes improvements based on the content delivery network, when an edge server receives a user's loading request, the server preprocesses the loading list for the source station, to allow the qualities of the requested images to be lower than the qualities of the original images. This creatively advances the well-accepted website optimization model in the field, without a need to change a user terminal configuration, change the code of the source station, or change the website architecture of the source station for a to-be-visited webpage. The implementation is convenient, which reduces the technical development time for website owners while providing a better web access experience from the user terminal side, thereby facilitating the promotion of the embodiments of the present disclosure. Overall, the disclosed embodiments of the present disclosure increase the page loading speed in webpage loading optimization, optimize user experience, and facilitate promotion. At the same time, there is no need to modify the code of source stations, thereby reducing the technical development time for website owners.

As a further improvement, in the above process of configuring the corresponding loading quality for the loading image item, the configured loading quality is determined based on the network environment. This further specifies the basis for determining the loading quality, thereby ensuring an enjoyable viewability of image in the process of optimizing page loading speed.

As a further improvement, the network environment may include: a terminal type and/or a transmission quality. This further specifies the basis for determining the network environment, which makes the process more consistent with the actual transmission scenario, and balances the picture quality with the loading speed to the utmost.

As a further improvement, the transmission quality is determined by the network delay. Since the transmission quality could be reflected by the network delay, it is more accurate to determine the transmission quality according to the network delay.

As a further improvement, the network delay is determined by the round-trip delay time. Determining the network delay in real-time according to the round-trip delay time is simple and accurate.

As a further improvement, the configured loading quality includes an image size.

As a further improvement, after feeding back the rewritten loading list to the user terminal, the method further includes: when an image loading request is received from the user terminal, an image that meets the requirement is provided based on the loading quality of the image loading request. This further specifies to provide a proper image based on the loading quality in the list, without a need to change the image quality in the source station. This makes the embodiments of the present disclosure more promotable.

As a further improvement, where providing an image that meets the requirement based on the loading quality in the image loading request further includes: if there is an image in a local cache that meets the requirement, providing the cached image to the user terminal; and if there is no image in the local cache that meets the requirement, processing the original image from the source station into an image that meets the requirement, and providing the processed image to the user terminal. This further specifies the way to provide an image that meets the requirement, where the image may be pre-stored locally or processed from the original image based on the needs. Diverse implementations are available, which facilitates the selection.

As a further improvement, an image processing module is used to process the original image from the source station into the image that meets the requirement.

As a further improvement, the method also includes: locally caching the image processed by the image processing module. The processed image is cached for backup, which helps reduce the loading time when the image is requested again.

As a further improvement, the method also includes: when rewriting the loading list, rewriting a to-be-accelerated resource in the loading list according to a predefined optimization scheme. This adds a step of further rewriting the list based on the optimization scheme, to allow the loading items to be optimized, which further optimizes the webpage loading speed and reduces the loading time.

### BRIEF DESCRIPTION OF THE DRAWINGS

The exemplary description of one or more embodiments will be made in detail with reference to the figures in the accompanying drawings. The exemplary description should not be constructed as limiting the disclosed embodiments. In the drawings, like reference numbers indicate like elements. Unless otherwise specified, figures in the accompanying drawings are not limited to the illustrated proportion.
FIG. 1 is a flowchart of a webpage loading method of Embodiment 1 according to some embodiments of the present disclosure;
FIG. 2 is a schematic diagram of RTT in establishing a communication connection in a webpage loading method of Embodiment 1 according to some embodiments of the present disclosure;
FIG. 3 is a schematic diagram of a processing logic of an edge server in a webpage loading method of Embodiment 1 according to some embodiments of the present disclosure;
FIG. 4 is a flowchart of a webpage loading method of Embodiment 2 according to some embodiments of the present disclosure;
FIG. 5 is a schematic structural diagram of a server of Embodiment 3 according to some embodiments of the present disclosure; and
FIG. 6 is a schematic diagram of a webpage loading system of Embodiment 4 according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings. Nonetheless, those skilled in the art will appreciate that, to provide a better understanding of the present disclosure, numerous technical details are presented in the embodiments of the present disclosure. However, even without these technical details and the modifications and variations made based on the various embodiments described as follows, the technical solutions that the present disclosure seeks to protect may still be implemented.

Embodiment 1 of the present disclosure relates to a webpage loading method.

The disclosed embodiment may be applied to a server, specifically, an edge server under the CDN architecture (e.g., an accelerated cloud platform). For an existing distributed computer system, the "content delivery network" or "CDN" is operated and managed by a service provider. The service provider typically provides content delivery service on behalf of a third party (such as a client) that uses the service provider infrastructure. This type of distributed system generally refers to a cluster of autonomous computers linked by one or more networks, but also includes software, systems, protocols, and technologies that are designed to facilitate a variety of services, such as content delivery, Web application acceleration, or other infrastructure on an original manufacturing site that supports outsourcing. A CDN service provider usually provides service delivery by digital attributes (such as a website), which are provided through a client portal and then deployed to the network. Digital assets are typically bound to one or more edge settings to allow a service provider to calculate traffic charges and charges for its clients. The above overlay network may be combined or interoperate with a front-end optimization (FEO) scheme. FEO is a process of accelerating a webpage by modifying the HTML and the resources thereon. The objective is to eliminate the bottleneck and inefficiency at the front end for a website that uses the overlay network. There are many specialized optimizations available in FEO that aim to achieve one or more of the following functions: reducing the number of HTTP requests required to load a webpage, but without downloading more data in a single request; reducing the overall size of a webpage and its elements by using a more efficient format, improving caching capacity, and removing unnecessary content; and accelerating webpage rendering by having a browser load elements in a different order or time, for instance, by preventing third-party scripts from delaying all other events on a webpage.

Specifically, in currently-known overlay network systems, a distributed computer system is configured as a CDN, and is assumed to contain a group of 1^{2a-n} machines that are distributed across the Internet. In general, most machines are servers located near the edge of the Internet, that is, located on or near a site where the end users connect to the network. The network operations command center (NOCC) manages the operations of various machines in the system. A third-party station/site, such as a website, offloads dispatched content (e.g. HTML, embedded page objects, streaming media, and software downloads) into the distributed computer system, particularly, the "edge" servers. Typically, a content provider offloads content transmission by redirecting the alias (e.g., through DNS CNAME) of a domain or a subdomain of a given content provider to a domain managed under a service provider's prestigious domain name. The intention is to direct content end users to the distributed computer system to retrieve content more reliably and efficiently. Although not illustrated in detail, the distributed computing system may include other infrastructure, such as a distributed data collection system that collects usage and other data from the edge servers. The collected data is aggregated in an area or a group of areas, which is then sent to other backend systems to facilitate monitoring, logging, alerting, billing, managing, and other operational and management functions.

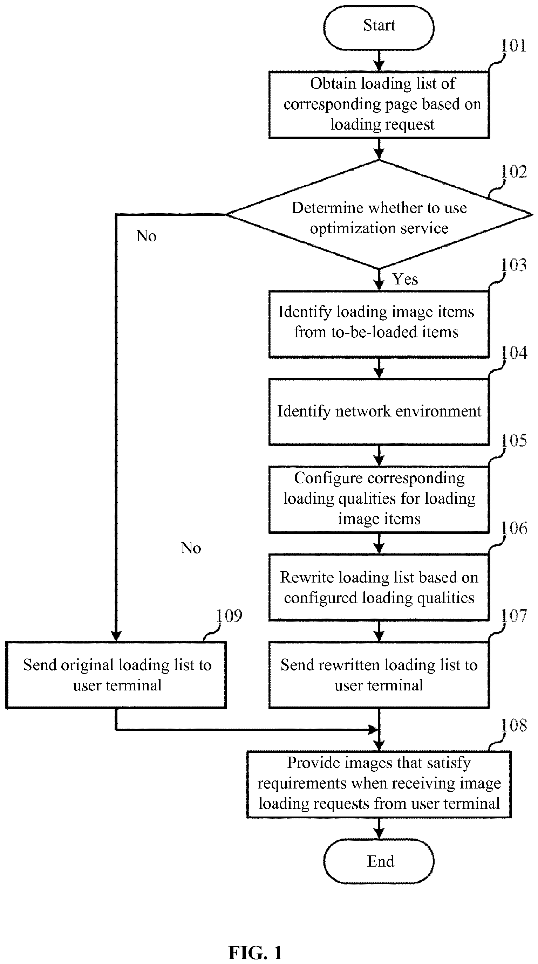

A flowchart of a webpage loading method of the present embodiment, as shown in FIG. 1, is illustrated as follows.

Step 101: obtain a loading list for the corresponding page based on a loading request.

Specifically, in this step, when a page loading request is received from a user terminal, a loading list of the corresponding page is obtained based on the page loading request. More specifically, the webpage loading request may be issued when a user loads a webpage through a browser, or when checking a page on an application (i.e., "APP").

It should be noted that a loading list (i.e., HTML document) includes a page's loading elements and the order in which the loading elements are loaded. At the same time, a loading list may be pre-stored on an edge server in the local. Even if the physical location of the server to which the webpage belongs is relatively far, the loading list may be still mirrored to the local in advance. Thereafter, when a webpage loading request is received, the pre-stored loading list may be directly fed back to the user terminal, to allow the user's browser to conduct subsequent operations. In real applications, a loading list for a to-be-visited webpage may be not pre-stored in the local. In this case, a server may then request the loading list from a source station to which the webpage belongs, and feedback the requested loading list to the user terminal. In addition, upon receiving the loading list, a local storing step is followed, to store the loading list in the local.

With respect to an edge server's processing of requests from user terminals, a detailed description is provided hereinafter with reference to a real application implementation. A customer (e.g., a user terminal) of an overlay network is provisioned to use FEO service by a customer portal, and CDN edge servers that are provided with configuration data suggesting that FEO should be applicable to the customer's site (or some portions thereof). Next, a first user request (i.e., a page loading request) is received at the edge server. An edge server GHost (global host) process evaluates the configuration data of the request and determines that the request should use FEO. The Ghost process then looks up the normalization information for this digital asset in its cache of FEO configurations. In some embodiments, the GHost process employs RESTful requests to communicate with the FEO network, and the data is transferred to an API (such as the Google Protocol Buffers). The API responds to the request for normalization by performing a database lookup for the digital asset, and returns the normalization standardized information. The response to the RESTful request is cached. Later, a second user request is received by the edge server Ghost process, which then analyzes the configuration data of the request and determines that the request should use FEO. The Ghost process then looks up the normalization information related to the customer. The normalization information is now present.

Step 102: determine whether to use the optimization service; if it is determined to use the optimization service, continue with Step 103; if it is determined not to use the optimization service, proceed to Step 109.

Specifically, the disclosed embodiment may consider that providing compressed images for a user terminal is an optimization service, and determine whether it is necessary to provide the optimization service. Subsequent steps are performed only when it is necessary to provide the optimization service. Otherwise, the original loading list is provided instead.

It should be noted that, in real applications, the present step may be omitted, and the default setting is to use the optimization service for all implementations.

Step 103: identify loading image items from the to-be-loaded items.

Specifically, the loading image items may be identified through the filenames in the list, for instance, through the identification of filename extensions. Image formats commonly used by websites include PNG, JPEG, GIF, and SVG. In real applications, tags may also be used to determine whether a loading item is an image, details of which will not be described again here.

Step 104: identify the network environment.

Specifically, identify the network environment from an edge node to a user terminal. The network environment may include: the terminal type and the transmission quality. Here, the terminal type includes mobile terminals such as mobile phones, and nonmobile terminals such as box terminals. The transmission quality includes multiple levels, such as excellent, good (3G fast), poor (2G), etc. The transmission quality may be determined based on the network type, such as WIFI™ network, mobile network, or fixed network, etc. In addition, in real applications, the network environment may include only the terminal type or only the transmission quality, or it may include factors other than the terminal type and transmission quality, details of which will not be provided again here.

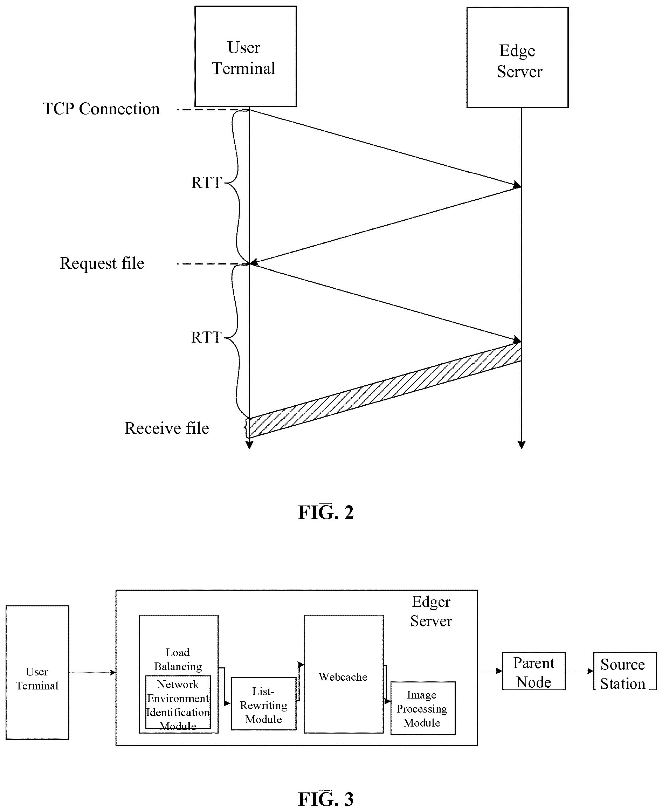

In the disclosed embodiment, the transmission quality is determined by the network delay. Specifically, the network delay is determined by the round-trip delay time (RTT time), more specifically, as shown in FIG. 2, by the RTT time between a user terminal and an edge server, i.e., the total experienced delay from the beginning of data transmission by the edge server until receiving the confirmation from the terminal by the edge server. For an edge server, the transmission time of "edge server - user terminal - edge server" may be obtained based on the time of communication for establishing the connection. Based on empirical data from years of company operation, the real-time network condition of a terminal may be obtained through a weighted calculation. In addition, the transmission quality may also be determined based on the RTT time, combined with the empirical data. In real applications, the network environment may be determined in other ways, which will not be described again here.

It should be noted that, in the disclosed embodiment, the network environment is identified after the loading image items are identified. This helps towards obtaining the transmission quality in real-time, thereby making the later configured loading qualities to be more consistent with the instant network environment. In real applications, the present step may also be moved to after confirming the use of optimization service but before identifying the loading image items, the details of which will not be described again here.

Step 105: configure the corresponding loading qualities for the loading image items.

Specifically, the configured loading qualities are lower than the loading qualities of the respective original images. The loading quality in the disclosed embodiment may include an image size. In real applications, the loading quality may also include pixels, a compression ratio, etc., the details of which will not be described again here.

In real applications, a correlation relationship may be set between the network environment and the corresponding loading qualities. After determining the network environment, the corresponding loading qualities may be obtained to configure the identified loading image items.

For example, assume that the terminal type is a mobile terminal. When the transmission quality is excellent, the picture size is configured to be 80% of the original picture size; when the transmission quality is good, the picture size is configured to be 50% of the original picture size; and when the transmission quality is poor, the picture size is configured to be 30% of the original picture size.

For another example, assume that the terminal type is a nonmobile terminal. When the transmission quality is excellent, the picture size is configured to be 90% of the original picture size; when the transmission quality is good, the picture size is configured to be 80% of the original picture size; and when the transmission quality is poor, the picture size is configured to be 60% of the original picture size.

While images take a long time as to the loading speed, the quality of images greatly affects a website's user experience. Steps 104 and 105 mentioned above provide images with different qualities based on the network environment, to allow images with different qualities to be provided based on the real-time network environment of a terminal. This is especially suitable for the webpage version, since the loading speed is increased, while at the same time the user experience is also ensured to the utmost.

Step 106: rewrite the loading list based on the configured loading qualities.

Specifically, the loading list may be rewritten by having the parameters to be included in the loading images items.

Step 107: send the rewritten loading list to the user terminal.

Specifically, after receiving the rewritten loading list, the user terminal may request each resource according to the rewritten loading list.

Step 108: when an image loading request from the user terminal is received, an image that meets the requirement is provided.

Specifically, when an image loading request from the user terminal is received, the image that meets the requirement according to the loading quality in the image loading request is provided.

More specifically, if the image that meets the requirement is not an original image, it may be cached in the local in advance. In this way, when the user terminal makes a request, the requested image may be directly extracted from the local and provided to the user terminal. It may also be possible that the image is not cached locally, or cached images fail to meet the requirement. In this scenario, an image processing module may be used to process the original image from the source station into an image that meets the requirement. Here, the processing may include changing the size, which usually compresses the image, changing the pixels, etc. In real applications, if the cache has images, but the image qualities do not meet the requirement, a cached image with a quality close to the quality of the requested image may be provided instead.

It should be noted that in real applications, an image processed by the image processing module may be locally cached. The processed image is cached for backup, which helps reduce the loading time should the image be requested again.

Step 109: send the original loading list to the user terminal.

Specifically, the original loading list sent in the present step is the original loading list obtained in Step 101.

Compared with the existing technologies, the main difference and its consequential effects of the disclosed embodiment lie in that: in the webpage loading process under the existing technologies, the loading items requested by a user terminal based on the loading list are all source files provided by the source station without intermediate processing, even the processing for the loading image items. However, in the present disclosure, the qualities of the images requested by a user terminal are lower than the qualities of the original images. This makes the data volume of the loading images smaller and the loading speed higher when loading the images, thereby improving the overall loading speed of the page. In addition, as the present disclosure makes improvements based on the content delivery network, when an edge server receives a user's loading request, the server preprocesses the loading list for the source station, to allow the qualities of the requested images to be lower than the qualities of the original images. This creatively advances the well-accepted website optimization model in the field, without a need to change a user terminal configuration, change the code of the source station, or change the website architecture of the source station for the to-be-visited webpage. The implementation is convenient, which reduces the technical development time for website owners while providing a better web access experience from the user terminal side, thereby facilitating the promotion of the embodiments of the present disclosure. Overall, the disclosed embodiments of the present disclosure increase the page loading speed in webpage loading optimization, optimize user experience, and facilitate promotion. At the same time, there is no need to modify the code of source stations, thereby reducing the technical development time for website owners.

It should be noted that, according to the webpage loading method in the above disclosed embodiment, the processing logic of an edge server in the content delivery network, as shown in FIG. 3, mainly includes three functional modules, specifically: a network environment identification module, a list rewrite module, and an image processing module. In real applications, the network environment identification module is embedded in a load balancing component, which means that its execution is distributed across multiple operating units, such as a Web server, an FTP server, an enterprise application critical server, and other mission critical servers, etc., which together finish the assigned tasks. The network environment identification module in the disclosed embodiment is configured to mainly determine the network environment at the time of data transmission. The list rewrite module is configured to rewrite the original loading list after it is determined to use the optimization function. The image processing module is configured to conduct image compression, and other processing, for the images from the source station, to get images with the required qualities in the request when there is no image in the cache with proper quality. In real applications, webcache is also included. The Web Cache server mainly caches static webpages and other content, but also possesses the file download and streaming media service capacities.

Embodiment 2 of the present disclosure relates to a webpage loading method. Embodiment 2 makes further improvements based on Embodiment 1, where the main improvement lies in: Embodiment 2 of the present disclosure adds an optimization process for other loading items in the list, and, at the same time, defines that this optimization process can be achieved through list-rewriting. This allows the loading of JS scripts in the list to be optimized, thereby further increasing the overall webpage loading speed.

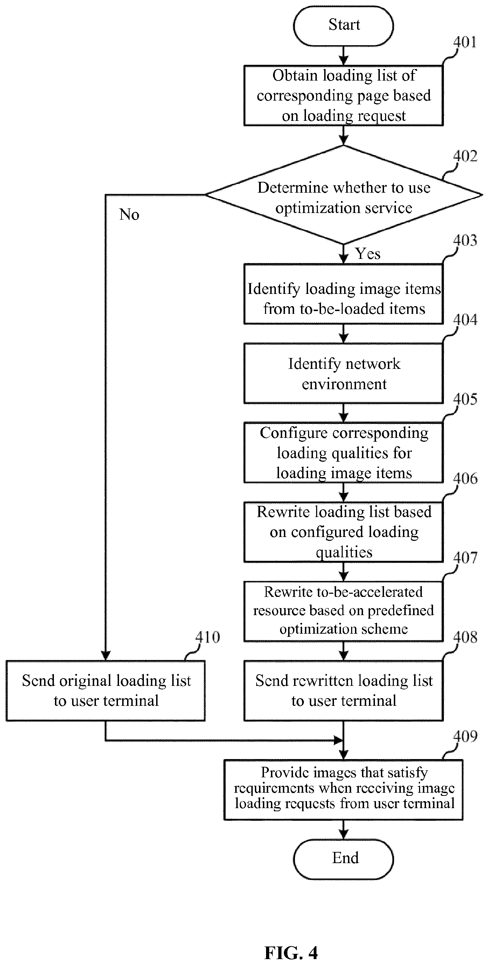

A flowchart of a webpage loading method of the present embodiment, as shown in FIG. 4, is illustrated as follows.

Steps 401-406 of the present embodiment are similar to Steps 101-106 of Embodiment 1, which will not be described again here.

Step 407: rewrite to-be-accelerated resources in the loading list according to predefined optimization schemes.

A to-be-accelerated resource may be a JS script, specifically, a third-party JS script, and more specifically, an external link. In real applications, the criteria for identifying a to-be-accelerated resource may be defined by the customer, and are not limited by the present disclosure. More specifically, during the implementation, a user terminal determines whether a resource is a script based on the <script> tags. For instance, for a JS script, the present step may use an src tag to determine whether a resource is a JS script, or an external link, etc.

Specifically, the predefined optimization schemes include at least one of the following: a desynchronization rewrite scheme, an acceleration rewrite scheme, and a blockage rewrite scheme. More specifically, a to-be-accelerated resource in a loading list is rewritten based on a predefined optimization scheme, where the predefined optimization scheme is determined according to a predefined strategy. Here, the predefined strategy may specify that all the to-be-accelerated resources use one certain optimization scheme, or different to-be-accelerated resources may be assigned with different optimization schemes. In addition, in real applications, besides the above three optimization schemes, based on needs, other optimization schemes may also be considered, the number and content of which are not limited here.

Specifically, which optimization scheme a to-be-accelerated resource should follow may be determined based on the predefined strategy. The predefined strategy may include the following three rules: (1) if a to-be-accelerated resource is a script file that meets a first predefined condition, the corresponding optimization scheme is a desynchronization rewrite scheme, where the first predefined condition may be a JS script, specifically, a third-party JS script, and more specifically, an external link. (2) If a to-be-accelerated resource is a third-party external link, the corresponding optimization scheme is an acceleration rewrite scheme. Specifically, domain name recognition may be used to determine whether a to-be-accelerated resource is a third-party external link. (3) If a to-be-accelerated resource falls in a predefined blacklist, the corresponding optimization scheme is a blockage rewrite scheme. Here, the blacklist may include loading items that are blocked by the firewall. Due to the influence of policies at the national level, some loading items may be not objectively loaded. Therefore, the blockage rewrite scheme may be used in optimization, to avoid unnecessary loading attempts.

Continuing with the elaboration, when it is determined to use the desynchronization rewrite scheme, the corresponding rewrite method is to rewrite the loading order for the script files that meet the first predefined condition in the loading list. When it is determined to use the acceleration rewrite scheme, the corresponding rewrite method is to add identification information to a specific location of the request address corresponding to the to-be-accelerated resource. Afterwards, a priority-based network node selection is applied to send a loading request for the to-be-accelerated resource that contains the identification information. When it is determined to use the blockage rewrite scheme, a stop tag is added to a specific location of the request address corresponding to the to-be-accelerated resource. Afterwards, when the loading request containing the stop tag is received by the server, a stop loading instruction is returned for the to-be-accelerated resource containing the stop tag.

It should be noted that, although Step 407 is put after Step 406 in the disclosed embodiment, in real applications, Step 406 and Step 407 may be not executed with a sequence, but rather simultaneously, or Step 407 may be executed before Step 406, details of which will not be described again here.

Steps 408-410 in the present embodiment are similar to Steps 107-109 in Embodiment 1, which will not be repeated again here.

It can be seen that the present embodiment adds a new optimization mechanism for JS scripts, to allow a webpage to leave the blank screen as soon as possible and a user to see the requested webpage as soon as possible, thereby improving the user's website access experience. In addition, all the implementations may use a list-rewriting approach, which changes very little to the processing logic, while the effect of page loading optimization is still obvious.

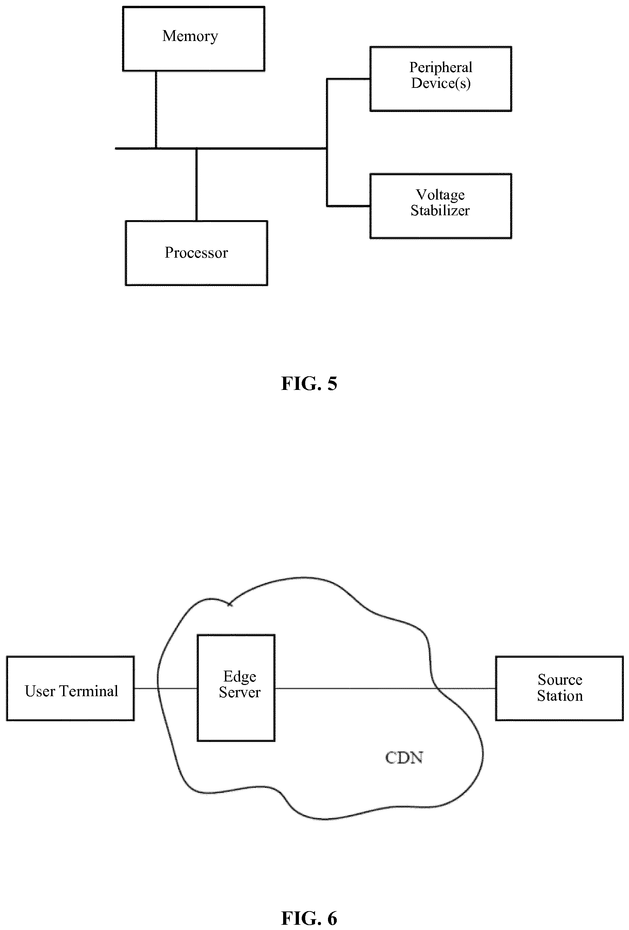

Embodiment 3 of the present disclosure relates to a server, as shown in FIG. 5, that includes:

at least one processor, and a memory that communicatively coupled to the at least one processor. The memory stores instructions that may be executed by the at least one processor. The instructions, when executed by the at least one processor, cause the at least one processor to implement any of the webpage loading methods described in Embodiments 1-2. The memory and the processors are connected by a bus, where the bus may include any number of interconnected buses and bridges. The bus connects the one or more processors and various circuits of the memory together. The bus may also connect a variety of other circuits together, such as peripheral devices, a voltage stabilizer, and power management circuits, all of which are well known in the relevant art, and will not be further described here. A bus interface provides an interface between the bus and a transceiver. The transceiver may comprise one component or multiple components, such as multiple receivers and transmitters, that provide units for communicating with a variety of other devices through the transmission media. Data processed by the processors is transmitted through an antenna over wireless media. Meanwhile, the antenna also receives and transmits data to the processors.

The processor(s) is responsible for bus management and routine processing, and may also provide various functions, including timing, peripheral interfaces, voltage regulation, power management, and other control functions. The memory may be used to store data used by the processor when performing certain operations.

Embodiment 4 of the present disclosure relates to a webpage loading system, as shown in FIG. 6, that specifically includes: a user terminal and the server disclosed in Embodiment 3, where the server may be an edge server under the CDN architecture. In real applications, the webpage loading system in the disclosed embodiment may also include a source station server to which a to-be-loaded webpage belongs.

Embodiment 5 of the present disclosure relates to a computer-readable storage medium that stores computer programs. The computer programs, when executed by a processor, implement the above disclosed method-related embodiments.

Persons with ordinary skill in the art should understand that all or part of the steps of the methods in the disclosed embodiments may be implemented through the computer programs that instruct relevant hardware. The computer programs are stored in a storage medium and include a plurality of instructions that are configured to allow a device (which may be a single chip microcomputer, a chip, etc.) or a processor to implement all or part of the steps of the methods in various embodiments of the present disclosure. The storage medium includes a flash drive, a mobile hard drive, ROM (Read-Only Memory), RAM (Random Access Memory), a magnetic disk, an optical disk, or any other medium that may store program code.

Those with ordinary skills in the art should understand that the foregoing embodiments are merely specific embodiments of the present disclosure. In real applications, various modifications may be made to these embodiments in form and in detail without departing from the spirit and principle of the present disclosure.

## Claims

1. A webpage loading method for application on an edge server in a content delivery network, the method comprising:
when receiving a page loading request from a user terminal, obtaining, based on the page loading request, a loading list of a corresponding page, wherein the loading list includes a plurality of to-be-loaded items;
identifying a loading image item from the to-be-loaded items, and configuring a corresponding loading quality for the loading image item, wherein the configured loading quality is lower than a loading quality of an original image;
rewriting the loading list based on the configured loading quality; and
feeding back the rewritten loading list to the user terminal, to allow the user terminal to request each loading item for loading the page.

2. The webpage loading method according to claim 1, wherein, when configuring the corresponding loading quality for the loading image item, the configured loading quality is determined based on network environment.

3. The webpage loading method according to claim 2, wherein the network environment includes a terminal type and/or a transmission quality.

4. The webpage loading method according to claim 3, wherein the transmission quality is determined by network delay.

5. The webpage loading method according to claim 4, wherein the network delay is determined by round-trip delay time.

6. The webpage loading method according to claim 1, wherein the configured loading quality includes an image size.

7. The webpage loading method according to claim 1, after feeding back the rewritten loading list to the user terminal, the method further includes:
when receiving an image loading request from the user terminal, providing an image that meets a requirement based on a loading quality in the image loading request.

8. The webpage loading method according to claim 7, wherein providing an image that meets the requirement based on the loading quality in the image loading request further includes:
if there is an image in a local cache that meets the requirement, providing the cached image to the user terminal; and
if there is no image in the local cache that meets the requirement, processing the original image from a source station into an image that meets the requirement, and providing the processed image to the user terminal.

9. The webpage loading method according to claim 8, wherein an image processing module is used to process the original image from the source station into the image that meets the requirement.

10. The webpage loading method according to claim 9, further comprising: locally caching the image processed by the image processing module.

11. The webpage loading method according to claim 1, further comprising:
when rewriting the loading list, rewriting a to-be-accelerated resource in the loading list according to a predefined optimization scheme.

12. A server, comprising:
at least one processor; and,
a memory communicatively coupled to the at least one processor; wherein:
the memory stores instructions executable by the at least one processor, and the instructions, when executed by the at least one processor, cause the at least one processor to implement any of the webpage loading methods according to claims 1-11.

13. A webpage loading system, comprising: a user terminal and the server according to claim 12.

14. A computer-readable storage medium, storing computer programs that, when executed by a processor, implement any of the webpage loading methods according to claims 1-11.
